# EUROPÄISCHE PATENTSCHRIFT

(11) **EP 2 933 522 B1**
(45) Veröffentlichungstag und Bekanntmachung des Hinweises auf die Patenterteilung: **20.12.2017**
(21) Anmeldenummer: 15000561.9
(22) Anmeldetag: 27.02.2015
(51) Int. Cl.: F16D 55/22, F16D 65/28, B60T 17/08

(54) **SATTELSCHEIBENBREMSE UND BETÄTIGUNGSEINRICHTUNG EINER SOLCHEN SATTELSCHEIBENBREMSE**
CALIPER DISC BRAKE AND ACTUATING DEVICE OF SUCH A CALIPER DISC BRAKE
ÉTRIER DE FREIN À DISQUE ET DISPOSITIF D'ACTIONNEMENT D'UN TEL ÉTRIER DE FREIN À DISQUE

(30) Priorität: 03.04.2014 DE 102014004905
(43) Veröffentlichungstag der Anmeldung: 21.10.2015
(73) Patentinhaber: WABCO Europe BVBA, 1160 Brussels (BE)
(72) Erfinder: Jungmann, Hans-Christian, 69517 Gorxheimertal (DE)
(74) Vertreter: Lauerwald, Jörg

(56) Entgegenhaltungen:
- EP-A2- 1 365 168
- DE-A1-102008 055 860
- DE-A1-102012 006 090
- US-A- 5 588 348

## Beschreibung

Die Erfindung betrifft eine Sattelscheibenbremse mit einem Bremssattel, der eine erste Flanschfläche aufweist, einer Betätigungseinrichtung, die eine in angeflanschtem Zustand an der ersten Flanschfläche anliegende zweite Flanschfläche aufweist, und einer Dichtung, die in angebrachtem Zustand einerseits an einer der Betätigungseinrichtung zugewandten ersten Dichtfläche an dem Bremssattel und andererseits an einer der ersten Dichtfläche bezüglich der Dichtung gegenüberliegenden und dem Bremssattel zugewandten zweiten Dichtfläche an der Betätigungseinrichtung anliegt.

Ferner betrifft die Erfindung eine Betätigungseinrichtung einer solchen Sattelscheibenbremse.

Sattelscheibenbremsen der oben genannten Art sind bekannt. Dabei begrenzen die erste und die zweite Dichtfläche einen Raum, in den sich die Dichtung hineinerstreckt. Die Dichtung umläuft dabei eine Funktionsöffnung der Betätigungseinrichtung bzw. des Bremssattels, durch die sich ein Stößel der Betätigungseinrichtung von der Betätigungseinrichtung in den Sattelinnenraum hineinerstreckt.

Da derjenige Raum, in den sich die Dichtung hineinerstreckt, einerseits von einer Dichtfläche an dem Bremssattel und andererseits von einer Dichtfläche an der Betätigungseinrichtung begrenzt wird, liegt dieser Raum an der Schnittstelle zwischen dem Bremssattel und der Betätigungseinrichtung.

Die erste Dichtfläche schließt sich an die erste Flanschfläche an. Die beiden Dichtflächen sind ringförmig und liegen innerhalb der ebenfalls ringförmig ausgestalteten Flanschflächen.

Die beiden Flanschflächen sind eben. Die Dichtflächen sind in der Regel ebenfalls im wesentlichen eben.

Bei den bekannten Sattelscheibenbremsen ist zur Bildung desjenigen Raumes, in den sich die Dichtung hineinstreckt, die erste Dichtfläche mit Abstand von der Ebene der ersten Flanschfläche angeordnet. Mit anderen Worten springt die erste Dichtfläche bezüglich der ersten Flanschfläche zurück. Sie bildet einen Absatz.

Zur Ausbildung dieses Absatzes sind bei der Herstellung des Bremssattels entsprechende Arbeitsschritte erforderlich. Diese Arbeitsschritte bedeuten Zeit- und Kostenaufwand. Es muß nämlich der in der Regel aus Gußeisen bestehende Bremssattel in geeigneter Weise nachbearbeitet werden.
Die DE10 2012 006090 A1 beschreibt eine Scheibenbremse, insbesondere für Nutzfahrzeuge, deren Aufgabe es ist, den Innenraum der Scheibenbremse zuverlässig abzudichten, auch wenn der Bremszylinder demontiert wird. Dabei ist der Stößel gegen ein Abziehen von dem Bremssattel durch ein Halteelement gesichert. Die Betätigungseinrichtung der Scheibenbremse weist weiterhin eine Dichtung auf. Die Dichtung dient dazu einen pneumatisch betätigten Stößel, der sich durch eine Funktionsöffnung in den Innenraum des Bremssattels hineinstreckt, von der Umgebung abzudichten. Der Bremssattel weist zwei Flanschflächen für die Betätigungseinrichtung auf, wobei die zweite Flanschfläche mit der zweiten Dichtfläche der Betätigungseinrichtung in einer Ebene liegt. Die erste Dichtfläche des Bremssattels springt bezüglich seiner ersten Flanschfläche zurück. Die erste Dichtfläche des Bremssattels und die zweite Dichtfläche der Betätigungseinrichtung liegen damit in unterschiedlichen Höhen, um Raum für die Aufnahme der Dichtung zu schaffen.
Aus der EP 1 365 168 A2 geht eine Scheibenbremse für Fahrzeuge, insbesondere für Straßenfahrzeuge hervor, die den Bereich der Dichtung zwischen Bremssattel und Betätigungszylinder gegen Unterrostung schützt und bei der Montage der Eintritt von Verunreinigungen in den Bremssattel vermeidet. Im Bereich der Öffnung zwischen dem Innenraum des Bremssattels und dem Innenraum des Betätigungszylinders ist eine Dichtung vorgesehen. Die Dichtung ist an einem bestehenden Zusatzelement festgelegt. Der Bremssattel weist zwei Flanschflächen und zwei Dichtflächen auf. Zur Aufnahme der Dichtung sind die Dichtflächen in einer anderen Höhe angeordnet als die Flanschflächen.

Der Erfindung liegt die Aufgabe zugrunde, die Sattelscheibenbremse der eingangs genannten Art derart zu verbessern, daß der Herstellungsaufwand verringert ist.

Erfindungsgemäß wird die gestellte Aufgabe dadurch gelöst, daß die zweite Dichtfläche mit Abstand von der Ebene der zweiten Flanschfläche angeordnet ist.

Dabei liegt der Erfindung die Erkenntnis zugrunde, daß durch Anordnen der zweiten Dichtfläche mit Abstand von der Ebene der zweiten Flanschfläche der oben beschriebene Raum, in den sich die Dichtung erstreckt, zwischen dem Sattel einerseits und der Betätigungseinrichtung andererseits auch dann geschaffen werden kann, wenn die erste Dichtfläche in derselben Ebene wie die erste Flanschfläche liegt. Dadurch kann die aufwendige Nachbearbeitung des Bremssattels entfallen, was den Herstellungsaufwand erheblich verringert. Das Anordnen der zweiten Dichtfläche mit Abstand von der Ebene der zweiten Flanschfläche ist mit nur geringem Aufwand verbunden, weil die dem Bremssattel zugewandte Seite der Betätigungseinrichtung aus einem leichter als Gußeisen in entsprechende Form zu bringenden Werkstoff ist.

Erfindungsgemäß bevorzugt ist es dabei, daß die erste und/oder die zweite Dichtfläche ringförmig, insbesondere kreisringförmig ist/sind.

Ferner ist es weiter bevorzugt, daß die Dichtung ringförmig, insbesondere kreisringförmig ist, zumindest soweit sie sich in den genannten Raum zwischen dem Bremssattel und der Betätigungseinrichtung erstreckt.

Wie bereits oben erwähnt ist es erfindungsgemäß bevorzugt vorgesehen, daß die Dichtung eine Funktionsöffnung des Bremssattels und/oder eine Funktionsöffnung der Betätigungseinrichtung abdichtet.

Nach einer weiter bevorzugten Ausführungsform der Erfindung ist eine Stufe zwischen der zweiten Flanschfläche und der zweiten Dichtfläche vorgesehen. Dies ist insbesondere besonders vorteilhaft, weil die zweite Dichtfläche der zweiten Flanschfläche benachbart ist.

Die Betätigungseinrichtung kann erfindungsgemäß prinzipiell beliebig ausgestaltet sein. Als besonders vorteilhaft wird es jedoch erachtet, daß zumindest der die zweite Flanschfläche und die zweite Dichtfläche aufweisende Teil der Betätigungseinrichtung ein Tiefziehteil aufweist. Ein Tiefziehteil ist nämlich mit besonders geringem Aufwand derart zu gestalten, daß die zweite Dichtfläche mit Abstand von der Ebene der zweiten Flanschfläche angeordnet ist.

Die zweite Flanschfläche und/oder die zweite Dichtfläche ist/sind erfindungsgemäß weiter bevorzugt an einem Gehäuse der Betätigungseinrichtung ausgebildet. Dieses Gehäuse kann dann wiederum derart gestaltet sein, daß es besonders einfach ist, die zweite Dichtfläche mit Abstand von der Ebene der zweiten Flanschfläche anzuordnen. So kann es beispielsweise ein Tiefziehteil sein.

Der Abstand der zweiten Dichtfläche von der Ebene der zweiten Flanschfläche liegt erfindungsgemäß bevorzugt im Bereich von 1 mm bis 6 mm, weiter bevorzugt im Bereich von 2 mm bis 4 mm, in einem konkreten Ausführungsbeispiel bei 3 mm.

Die erste Flanschfläche und die erste Dichtfläche liegen erfindungsgemäß weiter bevorzugt in derselben Ebene. Dadurch ist keine diesbezügliche Bearbeitung des Bremssattels erforderlich.

Die Betätigungseinrichtung kann erfindungsgemäß prinzipiell beliebig ausgestaltet sein. Bevorzugt arbeitet sie mit Druckluft.

Neben der oben beschriebenen Sattelscheibenbremse schafft die Erfindung auch eine Betätigungseinrichtung einer solchen Sattelscheibenbremse, d.h. eine Betätigungseinrichtung, bei der die zweite Dichtfläche mit Abstand von der Ebene der zweiten Flanschfläche angeordnet ist.

Im folgenden ist die Erfindung anhand eines bevorzugten Ausführungsbeispiels unter Bezugnahme auf die beiliegende Zeichnung mit weiteren Einzelheiten näher erläutert. Dabei zeigen
- Figur 1: eine schematische Schnittansicht einer herkömmlichen Sattelscheibenbremse,
- Figur 2: die gleiche Ansicht wie Figur 1, jedoch von einem Ausführungsbeispiel der Erfindung,

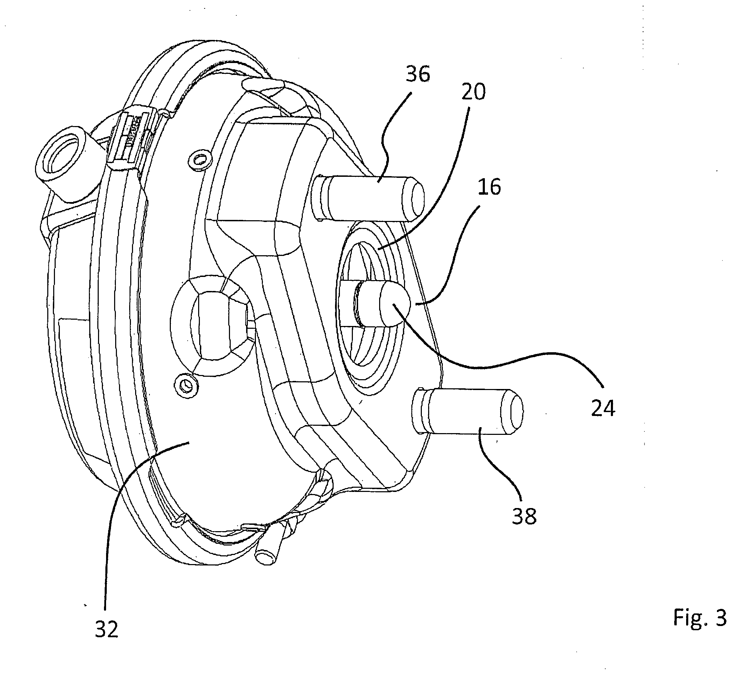

- Figur 3: eine schematische perspektivische Ansicht der Betätigungseinrichtung der Sattelscheibenbremse nach Figur 2, vor Montage der Dichtung, und

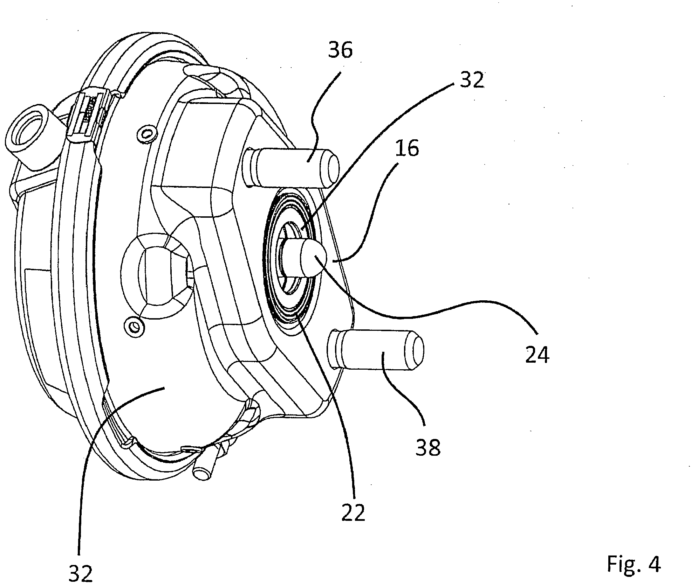

- Figur 4: die gleiche Ansicht wie Figur 3, jedoch mit montierter Dichtung.

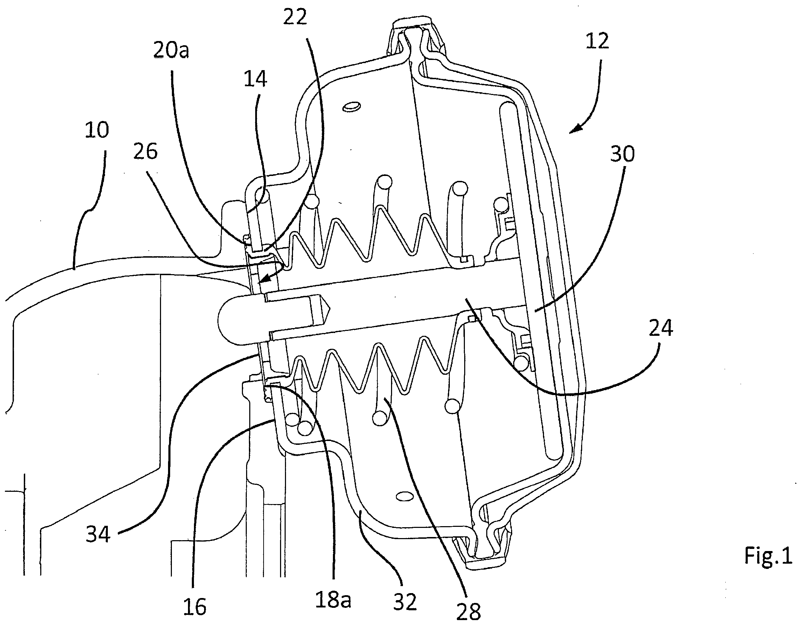

Zu der bekannten Sattelscheibenbremse nach Figur 1 gehört ein Bremssattel 10, an den eine Betätigungseinrichtung 12 angeflanscht ist. Dazu liegt an der ersten Flanschfläche 14 des Bremssattels 10 eine zweite Flanschfläche 16 der Betätigungseinrichtung 12 an. Der ersten Flanschfläche 14 des Bremssattels 10 benachbart liegt eine erste Dichtfläche 18a des Bremssattels 10. In gleicher Weise liegt benachbart der zweiten Flanschfläche 16 der Betätigungseinrichtung 12 eine zweite Dichtfläche 20a der Betätigungseinrichtung 12. In dem zwischen der ersten und der zweiten Dichtfläche 18a bzw. 20a liegenden ringförmigen Raum befindet sich ein Teil einer Dichtung 22. Die Dichtung 22 dient dazu, einen pneumatisch betätigten Stößel 24 der Betätigungseinrichtung 12, der sich durch eine Funktionsöffnung 26 in den Innenraum des Bremssattels 10 hineinerstreckt, von der Umgebung abzudichten. Eine Feder 28 dient zur Vorspannung einer mittels der bereits erwähnten Pneumatik betätigten Druckplatte 30.

Bei der herkömmlichen Sattelscheibenbremse nach Figur 1 liegt die zweite Flanschfläche 16 mit der zweiten Dichtfläche 20a der Betätigungseinrichtung 12 in einer Ebene, wohingegen die erste Dichtfläche 18a des Bremssattels 10 bezüglich seiner ersten Flanschfläche 14 zurückspringt, weshalb im Ergebnis die erste und die zweite Dichtfläche 18a bzw. 20a in unterschiedlichen Ebenen liegen und dadurch einen Raum für die Aufnahme der Dichtung 22 schaffen.

Um die erste Dichtfläche 18a des Bremssattels 10 bezüglich der ersten Flanschfläche 14, der zweiten Flanschfläche 16 und der zweiten Dichtfläche 20a zurückspringen zu lassen, ist eine spezielle Bearbeitung des aus gußeisernem Werkstoff bestehenden Bremssattels 10 erforderlich, beispielsweise Fräsen. Damit ist erheblicher Aufwand verbunden.

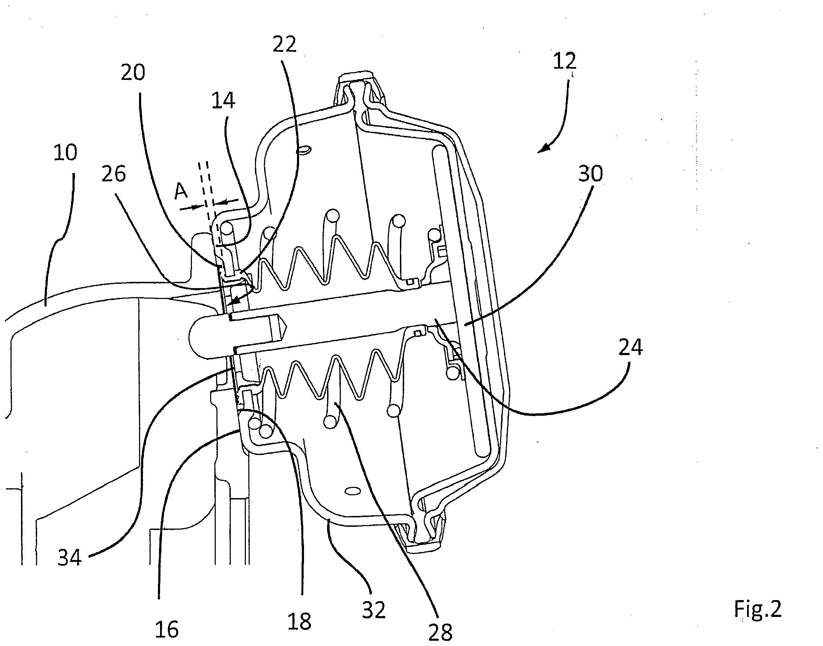

Anders bei dem in Figur 2 gezeigten Ausführungsbeispiel der Erfindung, das eine erste Dichtfläche 18 an dem Bremssattel 10 und eine zweite Dichtfläche 20 an der Betätigungseinrichtung 12 aufweist: Dort springt nämlich die zweite Dichtfläche 20 der Betätigungseinrichtung 12 bezüglich ihrer zweiten Flanschfläche 16 zurück. Mit anderen Worten ist die Ebene der zweiten Dichtfläche 20 bezüglich der Ebene der zweiten Flanschfläche 16 mit Abstand angeordnet. Der Abstand A beträgt in dem gezeigten Ausführungsbeispiel 3 mm. Dadurch wird ein Raum zum Aufnehmen der Dichtung 22 geschaffen, ohne daß es erforderlich wäre, die erste Dichtfläche 18 des Bremssattels 10 in einer anderen Ebene anzuordnen als die erste Flanschfläche 14. Mit anderen Worten ist eine entsprechende Nachbearbeitung des Bremssattels 20, beispielsweise durch Fräsen, nicht erforderlich.

Anders als im Falle des Bremssattels 10 ist es relativ einfach, den Ebenensprung zur Ausbildung des Aufnahmeraumes für die Dichtung 22 bei der zweiten Dichtfläche 20 bezüglich der zweiten Flanschfläche 16 der Betätigungseinrichtung 12 zu bewerkstelligen. Es handelt sich nämlich bei dem Gehäuse 32 der Betätigungseinrichtung 12 um ein Tiefziehteil, in das nur ein entsprechender Absatz mit dem Maß A eingeprägt werden muß.

Zur radialen Vorspannung der Dichtung 22 im Bereich der zweiten Dichtfläche 20 dient ein Halter 34.

Zur Befestigung der Betätigungseinrichtung 12 an dem Bremssattel 10 dienen Befestigungsbolzen 36, 38.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 10: Bremssattel
- 12: Betätigungseinrichtung
- 14: erste Flanschfläche
- 16: zweite Flanschfläche
- 18: erste Dichtfläche
- 18a: erste Dichtfläche
- 20: zweite Dichtfläche
- 20a: zweite Dichtfläche
- 22: Dichtung
- 24: Stößel
- 26: Funktionsöffnung
- 28: Feder
- 30: Druckplatte
- 32: Gehäuse
- 34: Halter
- 36: Befestigungsbolzen
- 38: Befestigungsbolzen
- A: Abstand

## Patentansprüche

1. Sattelscheibenbremse mit
einem Bremssattel (10), der eine erste Flanschfläche (14) aufweist,
einer Betätigungseinrichtung (12), die eine in angeflanschtem Zustand an der ersten Flanschfläche anliegende zweite Flanschfläche (16) aufweist, und
einer Dichtung (22), die in angebrachtem Zustand einerseits an einer der Betätigungseinrichtung zugewandten ersten Dichtfläche (18) an dem Bremssattel und andererseits an einer der ersten Dichtfläche bezüglich der Dichtung gegenüberliegenden und dem Bremssattel zugewandten zweiten Dichtfläche (20) an der Betätigungseinrichtung anliegt,
**dadurch gekennzeichnet, daß**
die zweite Dichtfläche (20) mit Abstand (A) von der Ebene der zweiten Flanschfläche (16) angeordnet ist.

2. Sattelscheibenbremse nach Anspruch 1, **dadurch gekennzeichnet, daß** die erste und/oder die zweite Dichtfläche (18, 20) ringförmig, insbesondere kreisringförmig ist/sind.

3. Sattelscheibenbremse nach Anspruch 1 oder 2, **dadurch gekennzeichnet, daß** die Dichtung (22) ringförmig, insbesondere kreisringförmig ist.

4. Sattelscheibenbremse nach einem der vorangehenden Ansprüche, **dadurch gekennzeichnet, daß** die Dichtung (22) eine Funktionsöffnung (26) des Bremssattels (10) und/oder eine Funktionsöffnung der Betätigungseinrichtung (12) abdichtet.

5. Sattelscheibenbremse nach einem der vorangehenden Ansprüche, **gekennzeichnet durch** eine Stufe zwischen der zweiten Flanschfläche (16) und der zweiten Dichtfläche (20).

6. Sattelscheibenbremse nach einem der vorangehenden Ansprüche, **dadurch gekennzeichnet, daß** zumindest der die zweite Flanschfläche (16) und die zweite Dichtfläche (20) aufweisende Teil (32) der Betätigungseinrichtung (12) ein Tiefziehteil aufweist.

7. Sattelscheibenbremse nach einem der vorangehenden Ansprüche, **dadurch gekennzeichnet, daß** die zweite Flanschfläche (16) und/oder die zweite Dichtfläche (20) an einem Gehäuse (32) der Betätigungseinrichtung ausgebildet ist/sind.

8. Sattelscheibenbremse nach einem der vorangehenden Ansprüche, **dadurch gekennzeichnet, daß** der Abstand (A) der zweiten Dichtfläche (20) von der Ebene der zweiten Flanschfläche (16) im Bereich von 1 mm bis 6 mm liegt, bevorzugt im Bereich vom 2 mm bis 4 mm, weiter bevorzugt bei 3 mm.

9. Sattelscheibenbremse nach einem der vorangehenden Ansprüche, **dadurch gekennzeichnet, daß** die erste Flanschfläche (14) und die erste Dichtfläche (18) in derselben Ebene liegen.

10. Sattelscheibenbremse nach einem der vorangehenden Ansprüche, **dadurch gekennzeichnet, daß** die Betätigungseinrichtung (12) mit Druckluft arbeitet.

11. Betätigungseinrichtung einer Sattelscheibenbremse nach einem der vorangegangenen Ansprüche, wobei die zweite Dichtfläche (20) mit Abstand (A) von der Ebene der zweiten Flanschfläche (16) angeordnet ist.

## Claims

1. Caliper disk brake having
a brake caliper (10) which has a first flange face (14),
an actuating device (12) which has a second flange face (16) which bears against the first flange face in the flange-connected state, and
a seal (22) which, in the attached state, bears on one side against a first sealing face (18) on the brake caliper, which first sealing face (18) faces the actuating device, and bears on the other side against a second sealing face (20) on the actuating device, which second sealing face (20) lies opposite the first sealing face with regard to the seal and faces the brake caliper,
**characterized in that**
the second sealing face (20) is arranged at a spacing (A) from the plane of the second flange face (16) .

2. Caliper disk brake according to Claim 1,
**characterized in that** the first and/or the second sealing face (18, 20) are/is annular, in particular circularly annular.

3. Caliper disk brake according to Claim 1 or 2,
**characterized in that** the seal (22) is annular, in particular circularly annular.

4. Caliper disk brake according to one of the preceding claims, **characterized in that** the seal (22) seals a functional opening (26) of the brake caliper (10) and/or a functional opening of the actuating device (12).

5. Caliper disk brake according to one of the preceding claims, **characterized by** a step between the second flange face (16) and the second sealing face (20) .

6. Caliper disk brake according to one of the preceding claims, **characterized in that** at least that part (32) of the actuating device (12) which has the second flange face (16) and the second sealing face (20) has a deep-drawn part.

7. Caliper disk brake according to one of the preceding claims, **characterized in that** the second flange face (16) and/or the second sealing face (20) are/is configured on a housing (32) of the actuating device.

8. Caliper disk brake according to one of the preceding claims, **characterized in that** the spacing (A) of the second sealing face (20) from the plane of the second flange face (16) lies in the range from 1 mm to 6 mm, preferably in the range from 2 mm to 4 mm, more preferably at 3 mm.

9. Caliper disk brake according to one of the preceding claims, **characterized in that** the first flange face (14) and the first sealing face (18) lie in the same plane.

10. Caliper disk brake according to one of the preceding claims, **characterized in that** the actuating device (12) operates with compressed air.

11. Actuating device of a caliper disk brake according to one of the preceding claims, where the second sealing face (20) is arranged at a spacing (A) from the plane of the second flange face (16).

## Revendications

1. Frein à disque à étrier avec
un étrier de frein (10), qui présente une première face de bride (14),
un dispositif d'actionnement (12), qui présente une seconde face de bride (16) appliquée contre la première face de bride dans l'état monté par bride, et
un joint d'étanchéité (22) qui, dans l'état posé, est appliqué d'une part sur une première face d'étanchéité (18) sur l'étrier de frein tournée vers le dispositif d'actionnement et d'autre part sur une seconde face d'étanchéité (20) sur le dispositif d'actionnement opposée à la première face d'étanchéité par rapport au joint d'étanchéité et tournée vers l'étrier de frein, **caractérisé en ce que** la seconde face d'étanchéité (20) est disposée à une distance (A) du plan de la seconde face de bride (16).

2. Frein à disque à étrier selon la revendication 1, **caractérisé en ce que** la première et/ou la seconde face(s) d'étanchéité (18, 20) est/sont de forme annulaire, en particulier de forme annulaire ronde.

3. Frein à disque à étrier selon la revendication 1 ou 2, **caractérisé en ce que** le joint d'étanchéité (22) est de forme annulaire, en particulier de forme annulaire ronde.

4. Frein à disque à étrier selon l'une quelconque des revendications précédentes, **caractérisé en ce que** le joint d'étanchéité (22) assure l'étanchéité d'une ouverture fonctionnelle (26) de l'étrier de frein (10) et/ou d'une ouverture fonctionnelle du dispositif d'actionnement (12).

5. Frein à disque à étrier selon l'une quelconque des revendications précédentes, **caractérisé par** un degré entre la seconde face de bride (16) et la seconde face d'étanchéité (20).

6. Frein à disque à étrier selon l'une quelconque des revendications précédentes, **caractérisé en ce qu'**au moins la partie (32) du dispositif d'actionnement (12) présentant la seconde face de bride (16) et la seconde face d'étanchéité (20) est une pièce emboutie.

7. Frein à disque à étrier selon l'une quelconque des revendications précédentes, **caractérisé en ce que** la seconde face de bride (16) et/ou la seconde face d'étanchéité (20) est/sont formée(s) sur un boîtier (32) du dispositif d'actionnement.

8. Frein à disque à étrier selon l'une quelconque des revendications précédentes, **caractérisé en ce que** la distance (A) de la seconde face d'étanchéité (20) au plan de la seconde face de bride (16) se situe dans la plage de 1 mm à 6 mm, de préférence dans la plage de 2 mm à 4 mm, et de préférence encore à 3 mm.

9. Frein à disque à étrier selon l'une quelconque des revendications précédentes, **caractérisé en ce que** la première face de bride (14) et la première face d'étanchéité (18) sont situées dans le même plan.

10. Frein à disque à étrier selon l'une quelconque des revendications précédentes, **caractérisé en ce que** le dispositif d'actionnement (12) opère avec de l'air comprimé.

11. Dispositif d'actionnement d'un frein à disque à étrier selon l'une quelconque des revendications précédentes, dans lequel la deuxième face d'étanchéité (20) est disposée à une distance (A) du plan de la seconde face de bride (16).
